# EUROPEAN PATENT APPLICATION

(11) **EP 4 488 323 A1**
(43) Date of publication of application: **08.01.2025**
(21) Application number: 23760230.5
(22) Date of filing: 28.02.2023
(51) Int. Cl.: C08L 9/00, B60C 1/00, C08K 3/04, C08K 3/06, C08K 3/16, C08K 3/22, C08K 3/36, C08K 5/098, C08K 5/14, C08K 5/34, C08K 5/3462, C08K 5/3477, C08K 5/3492, C08L 15/00

(54) **RUBBER COMPOSITION AND RUBBER PRODUCT**

(30) Priority: 28.02.2022 JP 2022030485; 05.09.2022 JP 2022141028
(71) Applicant: BRIDGESTONE CORPORATION, Chuo-ku Tokyo 104-8340 (JP)
(72) Inventor: KOTANI, Kyohei, Tokyo 104-8340 (JP); TANAKA, Takatsugu, Tokyo 104-8340 (JP); KOSAI, Tomoyuki, Tokyo 104-8340 (JP)
(74) Representative: Marks & Clerk LLP
(86) International application number: PCT/JP2023/007429
(87) International publication number: WO 2023/163232

(57) **Abstract**

The problem to be solved by the present disclosure is to provide a rubber composition that achieves both low fuel consumption performance and durability. The solution is a rubber composition including a diene-based rubber (A), a heterocyclic compound (B) having at least one heterocyclic ring selected from the group consisting of pyrimidine, pyridazine, pyrazine, triazine, and tetrazine rings, and a metal salt (C), wherein the bond dissociation energy between the metal salt (C) and the heterocyclic compound (B) is 200 kJ/mol or more.

## Description

### TECHNICAL FIELD

The present disclosure relates to a rubber composition and a rubber product.

### BACKGROUND

Conventionally, to improve the durability of rubber products such as tires, rubber crawlers, and seismic isolation rubber, rubber compositions with excellent durability such as crack propagation resistance have been required.

On the other hand, the demand for vehicles with lower fuel consumption is now growing with the global movement towards reduction in carbon dioxide emissions as a result of increased interest in environmental issues. To meet these demands, reducing the rolling resistance among tire performances is also required. Generally, the rolling resistance of the tires can be reduced by applying rubber compositions with low heat generating properties to tires, which contributes to achieving low fuel consumption performance of vehicles. Additionally, for rubber products other than tires, such as rubber crawlers and seismic isolation rubber, applying rubber compositions with low heat generating properties can reduce hysteresis loss, thereby achieving low fuel consumption performance.

For example, PTL 1 and PTL 2 disclose rubber compositions that include diene-based rubber, fillers such as carbon black and silica, and tetrazine compounds. By incorporating tetrazine compounds into the main chain of the diene-based rubber to improve the dispersibility of the fillers, the low fuel consumption performance of the rubber composition is improved.

### CITATION LIST

### Patent Literature

PTL 1: JP 2021-107506 A
PTL 2: JP 2020-176229 A

### SUMMARY

### (Technical Problem)

However, the low fuel consumption performance and durability of rubber compositions are generally in a trade-off relationship. Although the rubber compositions disclosed in PTL 1 and PTL 2 have improved low fuel consumption performance, there is still room for improvement in the durability.

Accordingly, to solve the problem of the above conventional technique, an object of the present disclosure is to provide a rubber composition that achieves both low fuel consumption performance and durability.

In addition, another object of the present disclosure is to provide a rubber product that achieves both low fuel consumption performance and durability.

### (Solution to Problem)

The summary of a rubber composition and a rubber product of the present disclosure that solves the above problem is as follows.
[1] A rubber composition comprising:
   a diene-based rubber (A);
   a heterocyclic compound (B) having at least one heterocyclic ring selected from the group consisting of pyrimidine, pyridazine, pyrazine, triazine, and tetrazine rings; and
   a metal salt (C), wherein
   a bond dissociation energy between the metal salt (C) and the heterocyclic compound (B) is 200 kJ/mol or more.
[2] The rubber composition according to [1], further comprising a sulfur (D).
[3] The rubber composition according to [2], wherein a mass ratio (D/C) of the sulfur (D) to the metal salt (C) is 0.1 to 10.
[4] The rubber composition according to any one of [1] to [3], wherein the heterocyclic compound (B) has a triazine ring or a tetrazine ring.
[5] The rubber composition according to [4], wherein
   the heterocyclic compound (B) is represented by the following general formula (1): 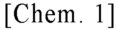 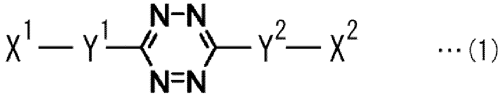 in the formula, X¹ and X² are each independently a pyridyl group or a pyrimidinyl group, and Y¹ and Y² are each independently a single bond or a divalent hydrocarbon group.
[6] The rubber composition according to any one of [1] to [5], wherein the metal salt (C) comprises a transition metal.
[7] The rubber composition according to any one of [1] to [6], wherein the metal salt (C) is a metal halide salt and/or a metal acetate salt.
[8] The rubber composition according to any one of [1] to [7], wherein
   the metal salt (C) is a metal salt other than zinc oxide, and
   the rubber composition further comprises a zinc oxide (E).
[9] The rubber composition according to any one of [1] to [8], further comprising a carbon black (F).
[10] The rubber composition according to any one of [1] to [9], further comprising a silica (G).
[11] The rubber composition according to any one of [1] to [10], further comprising an organic peroxide (H).
[12] The rubber composition according to any one of [1] to [11], wherein the diene-based rubber (A) is modified with the heterocyclic compound (B).
[13] The rubber composition according to any one of [1] to [12], wherein the diene-based rubber (A) has a weight average molecular weight (Mw) of 10,000 to 3,000,000.
[14] A rubber product selected from the group consisting of a tire, a rubber crawler, and a seismic isolation rubber, comprising
   the rubber composition according to any one of [1] to [13].

### (Advantageous Effect)

According to the present disclosure, it is possible to provide a rubber composition that achieves both low fuel consumption performance and durability.

In addition, according to the present disclosure, it is possible to provide a rubber product that achieves both low fuel consumption performance and durability.

### DETAILED DESCRIPTION

A rubber composition and a rubber product of the present disclosure are described below in detail with reference to embodiments thereof.

### <Rubber Composition>

The rubber composition of the present disclosure contains a diene-based rubber (A), a heterocyclic compound (B) having at least one heterocyclic ring selected from the group consisting of pyrimidine, pyridazine, pyrazine, triazine, and tetrazine rings, and a metal salt (C). In addition, in the rubber composition of the present disclosure, the bond dissociation energy between the metal salt (C) and the heterocyclic compound (B) is 200 kJ/mol or more.

As mentioned above, in rubber compositions, there is usually a trade-off relationship between low fuel consumption performance and durability. For example, if a rubber composition is crosslinked by adding sulfur to reduce the network density of the sulfur crosslinking, durability such as crack propagation resistance is improved, but the low fuel consumption performance is reduced. In order to overcome this trade-off relationship, the present inventors have studied diligently and found that the control of strain dependence in the expression of hysteresis loss is important.

In the rubber composition of the present disclosure, the heterocyclic compound (B) is added to the main chains of the diene-based rubber (A). Additionally, the metal salt (C) coordinatively bonds to a heterocyclic compound (B) portion added to a main chain of the diene-based rubber (A), forming complexes. The metal salt (C) forms multiple coordination bonds, resulting in crosslinking of the diene-based rubber (A) in the plural. Here, crosslinking through coordination bonds is a reversible crosslinking process where bonding (crosslinking) and dissociation (cleavage) are reversible. Although this crosslinking is weaker compared to sulfur crosslinking in conventional crosslinked rubber, in the rubber composition of the present disclosure, the bond dissociation energy between the metal salt (C) and the heterocyclic compound (B) is 200 kJ/mol or more. Therefore, even when the rubber composition is subjected to strain, it possesses sufficient strength in the low-strain region.

In the low-strain region, the rubber composition of the present disclosure can maintain a high network density through crosslinking through coordination bonds, thereby reducing hysteresis loss and improving the low fuel consumption performance. On the other hand, in the high-strain region, the crosslinking through coordination bonds in the rubber composition of the present disclosure cleaves, resulting in increased hysteresis loss. Additionally, the energy dissipation due to the cleavage of the crosslinking (i.e., sacrificial breaking of crosslinking through coordination bonds) enhances durability such as crack propagation resistance.

Accordingly, the rubber composition of the present disclosure can achieve both low fuel consumption performance and durability to a high degree, which cannot be achieved by conventional crosslinking solely by sulfur.

### --Diene-based Rubber (A)--

The rubber composition of the present disclosure contains a diene-based rubber (A). The inclusion of the diene-based rubber (A) in the rubber composition, together with the heterocyclic compound (B) and the metal salt (C), enables the formation of crosslinked structures.

The diene-based rubber (A) is a rubber containing units derived from a diene-based monomer (diene units) and may further contain units derived from a copolymerizable comonomer.

The units derived from the diene-based monomer described above enable crosslinking (vulcanization) of the diene-based rubber and also enable the provision of rubber-like elongation and strength. In the crosslinked rubber, although the diene-based rubber is usually present in a crosslinked state, a part of the diene-based rubber may not be crosslinked. Specifically, examples of the diene-based monomer (diene-based compound) include 1,3-butadiene, isoprene, 1,3-pentadiene, and 2,3-dimethyl-1,3-butadiene.

On the other hand, examples of the copolymerizable comonomer include aromatic vinyl compounds and the like. Specifically, examples of the aromatic vinyl compounds include styrene, o-methylstyrene, m-methylstyrene, p-methylstyrene, o,p-dimethylstyrene, o-ethylstyrene, methylstyrene, and p-ethylstyrene.

In addition, examples of the diene-based rubber (A) include natural rubber (NR), synthetic isoprene rubber (IR), styrene-butadiene rubber (SBR), butadiene rubber (BR), and chloroprene rubber (CR). These diene-based rubbers (A) may be used alone or as a blend of two or more kinds.

In the rubber composition of the present disclosure, the diene-based rubber (A) preferably has a weight average molecular weight (Mw) of 10,000 to 3,000,000. When the weight average molecular weight (Mw) of the diene-based rubber (A) is 10,000 or more, the low fuel consumption performance of the rubber composition is improved, and when Mw is 3,000,000 or less, workability in kneading of the rubber composition is improved. The weight average molecular weight (Mw) of the diene-based rubber (A) is more preferably 100,000 or more, even more preferably 120,000 or more from the viewpoint of the low fuel consumption performance of the rubber composition, and is more preferably 2,000,000 or less, even more preferably 1,800,000 or less from the viewpoint of workability in kneading of the rubber composition.

### --Heterocyclic Compound (B)--

The rubber composition of the present disclosure contains a heterocyclic compound (B) having at least one heterocyclic ring selected from the group consisting of pyrimidine, pyridazine, pyrazine, triazine, and tetrazine rings. Pyrimidine, pyridazine, pyrazine, triazine, and tetrazine rings have multiple nitrogen atoms in the ring and can coordinatively bond with multiple molecules of the metal salt (C). In addition, the heterocyclic compound (B), together with the metal salt (C), can also crosslink the diene-based rubber (A) in the plural.

In the present disclosure, the heterocyclic compound (B) is not used as a dispersing agent for fillers, but as coordination sites for the metal salt (C), thereby forming crosslinking through coordination bonds. The crosslinking through coordination bonds helps to maintain a high network density in the low strain region, thereby improving the low fuel consumption performance. On the other hand, in the high strain region, energy dissipation due to the cleavage of crosslinking through coordination bonds can improve durability such as crack propagation resistance.

The heterocyclic compound (B) preferably has a triazine ring or a tetrazine ring. A compound having a triazine ring or a tetrazine ring is highly reactive with the main chain of the diene-based rubber (A) and, in combination with the metal salt (C), tends to readily form crosslinking through coordination bonds.

Here, it is preferred that a pyridyl group or a pyrimidinyl group is bonded to the triazine ring or the tetrazine ring of the compound having the triazine ring or the tetrazine ring, and it is further preferred that two pyridyl or pyrimidinyl groups are bonded. When a pyridyl group or a pyrimidinyl group is bonded to the triazine ring or the tetrazine ring, the heterocyclic compound (B) and the metal salt (C) tend to be complexed more readily, and the bond dissociation energy tends to be increased, enabling the formation of stronger crosslinked structures. Furthermore, when two pyridyl or pyrimidinyl groups are bonded to the triazine ring or the tetrazine ring, the heterocyclic compound (B) and the metal salt (C) tend to be complexed even more readily, and the bond dissociation energy tends to be further increased, enabling the formation of even stronger crosslinked structures.

Note that the pyridyl group may be a 2-pyridyl group, a 3-pyridyl group, or a 4-pyridyl group, but a 2-pyridyl group is preferred. Also, the pyrimidinyl group may be a 2-pyrimidinyl group, a 4-pyrimidinyl group, or a 5-pyrimidinyl group.

The heterocyclic compound (B) is preferably represented by the following general formula (1): 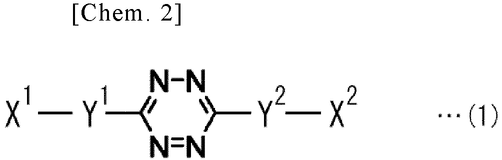 in the formula, X¹ and X² are each independently a pyridyl group or a pyrimidinyl group, and Y¹ and Y² are each independently a single bond or a divalent hydrocarbon group. The compound represented by the general formula (1) readily undergoes a Diels-Alder reaction with the main chain of the diene-based rubber (A) and, in combination with the metal salt (C), further tends to readily form crosslinking through coordination bonds. In addition, the compound represented by the general formula (1) and the metal salt (C) particularly tend to complex readily, and the bond dissociation energy tends to be particularly increased, enabling the formation of even stronger crosslinked structures.

In the above general formula (1), X¹ and X² are each independently a pyridyl group or a pyrimidinyl group. From the viewpoint of ease of synthesis, X¹ and X² are preferably pyridyl groups. The pyridyl group may be a 2-pyridyl group, a 3-pyridyl group, or a 4-pyridyl group, but a 2-pyridyl group is preferred. The pyrimidinyl group may be a 2-pyrimidinyl group, a 4-pyrimidinyl group, or a 5-pyrimidinyl group.

In the above general formula (1), Y¹ and Y² are each independently a single bond or a divalent hydrocarbon group. Here, examples of the divalent hydrocarbon group include alkylene, alkenylene, and arylene groups. More specifically, examples of alkylene groups include methylene, ethylene, trimethylene, and tetramethylene groups. Examples of alkenylene groups include vinylene, propenylene, and butenylene groups. Examples of arylene groups include phenylene, tolylene, and naphthylene groups. From the viewpoint of ease of synthesis, Y¹ and Y² are preferably single bonds (i.e., X¹ and X² are preferably directly bonded to the tetrazine ring).

Here, it is preferred that X¹ and X² in the above general formula (1) are pyridyl groups, and Y¹ and Y² are single bonds. In this case, the compound of the formula (1) is easily available, and it also particularly tends to complex readily with the metal salt (C) and the bond dissociation energy particularly tends to be high, enabling the formation of even stronger crosslinked structures.

Examples of the compound represented by the above general formula (1) include 3,6-di(2-pyridyl)-1,2,4,5-tetrazine, 3,6-di(3-pyridyl)-1,2,4,5-tetrazine, 3,6-di(4-pyridyl)-1,2,4,5-tetrazine, 3,6-di(2-pyridylmethyl)-1,2,4,5-tetrazine, 3,6-di(2-pyridylethyl)-1,2,4,5-tetrazine, 3-(2-pyridylmethyl)-6-(2-pyridylethyl)-1,2,4,5-tetrazine, 3,6-di(2-pyrimidinyl)-1,2,4,5-tetrazine, 3,6-di(4-pyrimidinyl)-1,2,4,5-tetrazine, and 3,6-di(5-pyrimidinyl)-1,2,4,5-tetrazine. Of these, 3,6-di(2-pyridyl)-1,2,4,5-tetrazine is preferred.

The content of the heterocyclic compound (B) in the rubber composition is preferably 0.1 parts by mass or more, more preferably 0.2 parts by mass or more, and is preferably 10 parts by mass or less, more preferably 5.0 parts by mass or less, per 100 parts by mass of the diene-based rubber (A). When the content of the heterocyclic compound (B) is 0.1 parts by mass or more per 100 parts by mass of the diene-based rubber (A), the network density of coordination bond crosslinking is increased, hysteresis loss in the low strain region is further reduced, and the low fuel consumption performance of the rubber composition is improved. In addition, when the content of the heterocyclic compound (B) is 10 parts by mass or less per 100 parts by mass of the diene-based rubber (A), a crosslinked rubber with sufficient elastomeric properties becomes more likely to be obtained.

It is preferable that the diene-based rubber (A) is modified with the heterocyclic compound (B). When the diene-based rubber (A) is modified with the heterocyclic compound (B), the multiple main chains of the diene-based rubber (A) can be crosslinked simply by causing multiple heterocyclic compound (B) portions to complex with the metal salt (C), which is described below, to form coordination bonds. Here, the modification of the diene-based rubber (A) by the heterocyclic compound (B) may be achieved at the blending stage of the rubber composition. Alternatively, the diene-based rubber (A) may be modified with the heterocyclic compound (B) in advance prior to blending the rubber composition, and the diene-based rubber (A) modified with the heterocyclic compound (B) may be blended with the metal salt (C), etc., at the blending stage of the rubber composition to crosslink the multiple main chains of the diene-based rubber (A).

When the diene-based rubber (A) is modified with the heterocyclic compound (B), the heterocyclic compound (B) is bonded to the monomer units in the main chains of the diene-based rubber (A) in an amount of preferably 0.01 to 10 mol%, more preferably 0.02 to 8 mol%, even more preferably 0.03 to 5 mol%, and particularly preferably 0.03 to 3 mol%. When the heterocyclic compound (B) is bonded to the monomer units in the main chains of the diene-based rubber (A) in an amount of 0.01 mol% or more, the network density of coordination bond crosslinking is increased, hysteresis loss in the low strain region is further reduced, and the low fuel consumption performance of the rubber composition is improved. Furthermore, when the heterocyclic compound (B) is bonded to the monomer units in the main chains of the diene-based rubber (A) in an amount of 10 mol% or less, a crosslinked rubber with sufficient elastomeric properties becomes more likely to be obtained.

### --Metal Salt (C)--

The rubber composition of the present disclosure contains a metal salt (C). The metal salt (C) forms coordination bonds with the heterocyclic compound (B) in the plural, resulting in the crosslinking of the diene-based rubber (A) in the plural. Here, crosslinking through coordination bonds is a reversible crosslinking in which bonding (crosslinking) and dissociation (cleavage) are reversible. It is a crosslinking with a relatively low bond dissociation energy and can be reversibly regenerated even if broken by external stimuli.

The metal salt (C) preferably contains a transition metal. Metal salts containing transition metals tend to complex readily with the heterocyclic compound (B).

Examples of the transition metal include, for example, elements in Groups 7 to 11 in the periodic table.

Specifically, examples of elements in Group 7 in the periodic table include manganese and rhenium.

Furthermore, examples of elements in Group 8 in the periodic table include iron, ruthenium, and osmium.

Furthermore, examples of elements in Group 9 in the periodic table include cobalt, rhodium, and iridium.

Furthermore, examples of elements in Group 10 in the periodic table include nickel, palladium, and platinum.

Furthermore, examples of elements in Group 11 in the periodic table include copper.

Furthermore, elements in Groups 7 to 11 in the periodic table tend to bond strongly with the heterocyclic compound (B). Furthermore, when the metal salt (C) contains an element in Group 8 in the periodic table, the bond with the heterocyclic compound (B) tends to be even stronger.

With regard to the metal ion in the metal salt (C), the valence of the ion is not particularly limited and can be any valence that each element can take, but preferably the ion is divalent or higher.

It is particularly preferred that the metal salt (C) contains iron and/or nickel. Iron and nickel ions tend to bond particularly strongly with the heterocyclic compound (B) and can form stronger crosslinked structures. Note that the valence of the iron ion is preferably divalent (Fe²⁺) or trivalent (Fe³⁺).

Examples of the metal salt (C) include metal halide salts, metal sulfate salts, metal nitrate salts, and metal acetate salts. Of these, metal halide salts and metal acetate salts are preferred. Metal halide and metal acetate salts are easy to handle and tend to form bonds readily with the heterocyclic compound (B). Note that the form of the metal salt (C) is not particularly limited and may be, for example, a hydrate.

In addition, examples of the metal halide salts include metal fluoride salts, metal chloride salts, metal bromide salts, and metal iodide salts. Of these, metal chloride salts are preferred. Metal chloride salts are easy to handle and tend to form bonds further readily with the heterocyclic compound (B).

Specifically, examples of the metal salt (C) include FeCl₂, FeCl₂·4H₂O, FeCl₃, FeCl₃·6H₂O, and Ni(CH₃COO)₂·4H₂O. One metal salt (C) may be used alone or two or more of these may be used in a combination.

Note that the metal salt (C) is preferably a metal salt other than metal oxides, carbonic acid metal salts, or metal salts of fatty acids with a carbon number of 10 or more. Metal salts (C) other than metal oxides, metal carbonate salts, and metal salts of fatty acids with 10 or more carbons tend to form coordinate bonds further readily (tend to complex further readily) with the heterocyclic compound (B) portions added to the diene-based rubber (A) chain. Therefore, the use of a metal salt (C) other than those described above further promotes the formation of crosslinking through coordination bonds.

The content of the metal salt (C) is preferably in the range of 0.1 to 30 parts by mass, more preferably in the range of 0.1 to 15 parts by mass, even more preferably in the range of 0.1 to 10 parts by mass, and particularly preferably in the range of 0.1 to 5 parts by mass, per 100 parts by mass of the diene-based rubber (A). When the content of the metal salt (C) is 0.1 parts by mass or more per 100 parts by mass of the diene-based rubber (A), the network density of coordination bond crosslinking is increased, hysteresis loss in the low strain region is further reduced, and the low fuel consumption performance of the rubber composition is improved. In addition, when the content of the metal salt (C) is 30 parts by mass or less per 100 parts by mass of the diene-based rubber (A), a crosslinked rubber with sufficient elastomeric properties becomes more likely to be obtained.

In the rubber composition of the present disclosure, the bond dissociation energy between the metal salt (C) and the heterocyclic compound (B) is 200 kJ/mol or more, preferably 240 kJ/mol or more, and is preferably 500 kJ/mol or less. When the bond dissociation energy is 200 kJ/mol or more, the rubber composition will have sufficient strength in the low strain region, and the low fuel consumption performance of the rubber composition can be sufficiently improved. Furthermore, when the bond dissociation energy is 500 kJ/mol or less, the crosslinking through coordination bonds between the metal salt (C) and the heterocyclic compound (B) becomes more prone to cleave in the high-strain region. This energy dissipation due to the cleavage of crosslinking can further enhance the durability such as crack propagation resistance of the rubber composition.

Here, in the present disclosure, the bond dissociation energy between the metal salt (C) and the heterocyclic compound (B) is a value calculated in the M06/6-31G(d,p)//B3PW91-D3/6-31G(d,p) level or the M06/6 -31G(d,p) level in vacuum, and is a calculated value in the structure in which the heterocyclic compound (B) is bonded to the diene-based rubber (A). It is considered that the metal salt (C) and the heterocyclic compound (B) form ionic aggregates. Gaussian 09 or GRRM 14 can be used to calculate the bond dissociation energy.

For example, crosslinking through coordination bonds can be formed by mixing (kneading) the diene-based rubber (A), the heterocyclic compound (B), and the metal salt (C). Here, conditions in kneading such as temperature and time are preferably selected according to the types and reactivities of the diene-based rubber (A), the heterocyclic compound (B), and the metal salt (C) to be used.

As an example, the reaction scheme of the modification of the diene-based rubber (A) and the coordination bond crosslinking (complexation) of the modified diene-based rubber when 3,6-di(2-pyridyl)-1,2,4,5-tetrazine is used as the heterocyclic compound (B) and iron chloride (FeCl₂) is used as the metal salt (C) is described below. Note that the structure of the modified diene-based rubber described herein is one example of a possible structure and this is not limiting.

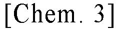

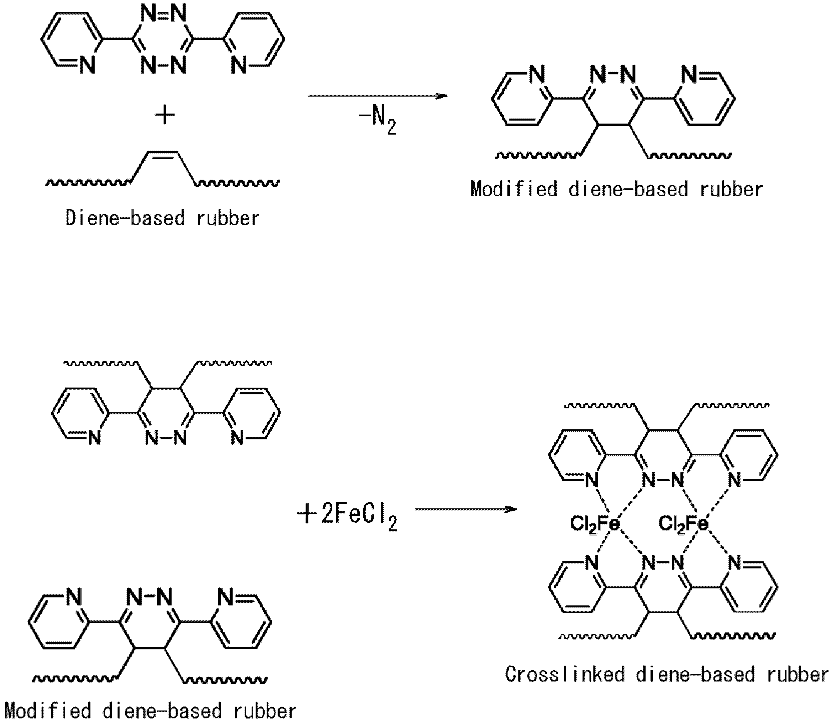

As described in the upper part of the above reaction scheme, in one embodiment of the present disclosure, a modified diene-based rubber is formed by a Diels-Alder reaction of the main chain of the diene-based rubber (A) with the heterocyclic compound (B). In the present embodiment, nitrogen is eliminated during the Diels-Alder reaction, but any other reactions may be used for the modification reaction.

Furthermore, as described in the lower part of the above reaction scheme, in one embodiment of the present disclosure, the complexation of the modified diene-based rubber and the metal salt (C) produces diene-based rubber crosslinked through coordination bonds (complexed diene-based rubber). Although it is depicted in the above reaction scheme that the nitrogen atoms in the tetrazine residue, the nitrogen atoms in the pyridyl group bonded to the tetrazine residue, and iron ions form complexes, diene-based rubber crosslinked through coordination bonds may take various crosslinking modes.

### --Sulfur (D)--

The rubber composition of the present disclosure preferably contains a sulfur (D). When the rubber composition contains the sulfur (D) together with the metal salt (C), the rubber composition after crosslinking will have both crosslinking through coordination bonding by the metal salt (C) and sulfur crosslinking (dual cross linking: DCL). In the low strain region, the network density is maintained at an even higher level through both coordination bond crosslinking and sulfur crosslinking, thereby further reducing hysteresis loss and further improving the low fuel consumption performance. On the other hand, in the high-strain region, in addition to the energy dissipation due to the cleavage of crosslinking through coordination bonds, the presence of sulfur crosslinking further enhances the strength of the rubber composition (referred to as "crosslinked rubber composition" or "crosslinked rubber"), leading to further improvement in durability such as crack propagation resistance.

The content of the sulfur (D) in the rubber composition is preferably 0.1 parts by mass or more, more preferably 0.3 parts by mass or more, and is preferably 30 parts by mass or less, and more preferably 10 parts by mass or less, per 100 parts by mass of the diene-based rubber (A). When the content of the sulfur (D) is 0.1 parts by mass or more per 100 parts by mass of the diene-based rubber (A), the net density by sulfur is improved and the low fuel consumption performance is further enhanced. In addition, when the content of the sulfur (D) is 30 parts by mass or less per 100 parts by mass of the diene-based rubber (A), a crosslinked rubber with sufficient elastomeric properties becomes more likely to be obtained.

Here, the mass ratio (D/C) of the sulfur (D) to the metal salt (C) is preferably 0.1 to 10. When the mass ratio (D/C) of the sulfur (D) to the metal salt (C) is within the range of 0.1 to 10, the rubber composition will have a better balance between the low fuel consumption performance and the durability. From the viewpoint of the balance between the low fuel consumption performance and the durability of the rubber composition, the mass ratio (D/C) of the sulfur (D) to the metal salt (C) is more preferably in the range of 0.1 to 8, and even more preferably in the range of 0.1 to 6.

Note that the rubber composition of the present disclosure preferably has a mass ratio (D/C') of the sulfur (D) to a metal salt (C') other than zinc oxide of 0.1 to 10.

### --Zinc Oxide (E)--

In the rubber composition of the present disclosure, when the metal salt (C) is a metal salt other than zinc oxide, the rubber composition preferably further contains a zinc oxide (E). When the rubber composition contains a zinc oxide (E) along with a metal salt other than zinc oxide, the low fuel consumption performance and durability of the rubber composition is further improved.

The content of the zinc oxide (E) in the rubber composition is preferably 0.1 parts by mass or more, more preferably 0.5 parts by mass or more, and is preferably 30 parts by mass or less, more preferably 10 parts by mass or less, per 100 parts by mass of the diene-based rubber (A). When the content of the zinc oxide (E) is in the range from 0.1 to 30 parts by mass per 100 parts by mass of the diene-based rubber (A), the low fuel consumption performance and durability of the rubber composition are even further improved.

Note that the mass ratio (E/C') of zinc oxide (E) to a metal salt (C') other than zinc oxide is preferably in the range of 0.1 to 50, and more preferably in the range of 1 to 20.

### --Carbon Black (F)--

The rubber composition of the present disclosure preferably further contains a carbon black (F). The inclusion of the carbon black (F) in the rubber composition improves the reinforcing properties of the rubber composition and further enhances durability.

Any kind of carbon black may be used as the carbon black (F). Examples include carbon black of GPF, FEF, HAF, ISAF, and SAF grades. The above-listed carbon black (F) may be used alone or in combination of two or more.

The content of the carbon black (F) in the rubber composition is preferably 2 parts by mass or more, more preferably 5 parts by mass or more, and is preferably 100 parts by mass or less, more preferably 90 parts by mass or less, per 100 parts by mass of the diene-based rubber (A). When the content of the carbon black (F) is 2 parts by mass or more per 100 parts by mass of the diene-based rubber (A), the reinforcing property of the rubber composition is further improved and the durability is even further enhanced. Furthermore, when the content of the carbon black (F) is 100 parts by mass or less per 100 parts by mass of the diene-based rubber (A), the low fuel consumption performance of the rubber composition is further enhanced.

### --Silica (G)--

The rubber composition of the present disclosure preferably further contains a silica (G). The inclusion of the silica (G) in the rubber composition improves the reinforcing properties of the rubber composition and further enhances durability.

Examples of the silica (G) include wet silica (hydrous silicate), dry silica (anhydrous silicate), calcium silicate, and aluminum silicate. The above-listed silica (G) may be used alone or in combination of two or more.

The content of the silica (G) in the rubber composition is preferably 2 parts by mass or more, 5 parts by mass or more, and is preferably 100 parts by mass or less, more preferably 90 parts by mass or less, per 100 parts by mass of the diene-based rubber (A). When the content of the silica (G) is 2 parts by mass or more per 100 parts by mass of the diene-based rubber (A), the reinforcing property of the rubber composition is further improved and the durability is even further enhanced. Furthermore, when the content of the silica (G) is 100 parts by mass or less per 100 parts by mass of the diene-based rubber (A), the low fuel consumption performance of the rubber composition is further enhanced.

Note that the mass ratio (F/G) of the carbon black (F) to the silica (G) is preferably in the range of 0.02 to 50, and more preferably in the range of 0.05 to 20.

### --Organic Peroxide (H)--

The rubber composition of the present disclosure preferably further contains an organic peroxide (H). When the rubber composition contains the organic peroxide (H) together with the metal salt (C), the rubber composition after crosslinking will have crosslinking through coordination bonds by the metal salt (C) and crosslinked structures (such as C-C bonds) due to the organic peroxide (H) (dual cross linking: DCL). In the low strain region, since a higher network density is maintained due to both crosslinking through coordination bonds and crosslinking structures due to the organic peroxide (H), hysteresis loss can be further reduced and the low fuel consumption performance can be improved. On the other hand, in the high strain region, the presence of crosslink structures due to the organic peroxide (H), in addition to energy dissipation due to the cleavage of crosslinking through coordination bonds, further improves durability such as crack propagation resistance.

Examples of the organic peroxide (H) include, but are not particularly limited to, tert-butyl hydroperoxide, 1,1,3,3-tetramethylbutyl hydroperoxide, cumene hydroperoxide, p-menthane hydroperoxide, diisopropyl benzene hydroperoxide, dicumyl peroxide, di-tert-butyl peroxide, di-tert-hexyl peroxide, diisopropyl benzene hydroperoxide, tert-butyl cumyl peroxide, di(2-tert-butylperoxyisopropyl) benzene, 2,5-dimethyl-2,5-di(tert-butylperoxy) hexane, peroxybenzoic acid, benzoyl peroxide, 1,1-bis(1,1-dimethylethylperoxy) cyclohexane, 1,1-bis(tert-butylperoxy) cyclohexane, 1,1-bis(tert-butylperoxy)-3,3,5-trimethylcyclohexane, 1,1-bis(tert-hexylperoxy)-3,3,5-trimethylcyclohexane, 1,1-bis(tert-hexylperoxy) cyclohexane, 2,2-bis(4,4-di-(tert-butylperoxy)cyclohexyl) propane, n-butyl-4,4-di-(tert-butylperoxy) valerate, tert-butylperoxy laurate, tert-butylperoxy-2-ethylhexanoate, 1,1,3,3-tetramethylbutylperoxy-2-ethylhexanoate, tert-hexylperoxy-2-ethylhexanoate, tert-butylperoxy-2-ethylhexanoate, tert-butyl peroxyacetate, cyclohexanone peroxide, acetylacetone peroxide, diisopropyl peroxydicarbonate, and di(4-tert-butylcyclohexyl) peroxydicarbonate. These organic peroxides (H) may be used alone or in combination of two or more.

The content of the organic peroxide (H) in the rubber composition is preferably 0.1 parts by mass or more, more preferably 0.5 parts by mass or more, and is preferably 30 parts by mass or less, more preferably 20 parts by mass or less, per 100 parts by mass of the diene-based rubber (A). When the content of the organic peroxide (H) is 0.1 parts by mass or more per 100 parts by mass of the diene-based rubber (A), the network density of the crosslinked structure due to the organic peroxide (H) is improved and the low fuel consumption performance is further enhanced. Furthermore, when the content of the organic peroxide (H) is 30 parts by mass or less per 100 parts by mass of the diene-based rubber (A), a crosslinked rubber with sufficient elastomeric properties becomes more likely to be obtained.

Note that the mass ratio (D/H) of the organic peroxide (H) to the sulfur (D) is preferably in the range of 0.003 to 300, and more preferably in the range of 0.01 to 100.

### --Others--

In addition to the above-described diene-based rubber (A), the heterocyclic compound (B), the metal salt (C), the sulfur (D), the zinc oxide (E), the carbon black (F), the silica (G), and the organic peroxide (H), the rubber composition of the present disclosure may contain other compounding agents commonly used in the rubber industry. Examples thereof may include softening agents, stearic acid, waxes, antioxidants, silane coupling agents, anti-adhesion agents (fatty acid metal salts), and vulcanization accelerators, selected as appropriate within the scope that does not deviate from the objects of the present disclosure. Commercial products are suitable for use as these compounding agents.

Examples of the vulcanization accelerators include sulfenamide-based vulcanization accelerators, guanidine-based vulcanization accelerators, thiazole-based vulcanization accelerators, thiuram-based vulcanization accelerators, and dithiocarbamate-based vulcanization accelerators. Among the above, sulfenamide-based vulcanization accelerators are preferable. These vulcanization accelerators may be used alone, or two or more of these may be used in combination. The amount of the vulcanization accelerator is not particularly limited and is preferably in the range of 0.1 to 5 parts by mass, more preferably in the range of 0.3 to 3 parts by mass, per 100 parts by mass of the diene-based rubber (A).

### --Method of Manufacturing Rubber Composition--

The method of manufacturing the rubber composition is not particularly limited, but the rubber composition can be manufactured, for example, by blending the diene-based rubber (A), the heterocyclic compound (B), the metal salt (C) mentioned above with various ingredients selected as needed, and then kneading, warming, extruding, etc.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, which are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

For example, in the first stage of kneading, the diene-based rubber (A) and the heterocyclic compound (B), along with various ingredients selected as necessary, are blended and kneaded to produce a mixture containing a modified diene-based rubber where the heterocyclic compound (B) is bonded to the main chain of the diene-based rubber (A). Then, in the second or later stage of kneading, the metal salt (C) and various ingredients selected as necessary are blended and kneaded to cause the diene-based rubber (A) modified with the heterocyclic compound (B) to complex, thereby forming crosslinked structures through coordination bonds. Such a method of manufacturing a rubber composition has excellent productivity because crosslinked structures through coordination bonds can be formed during the manufacturing of the rubber composition (kneading of the rubber composition).

Alternatively, a modified diene-based rubber where the heterocyclic compound (B) is bonded to the main chain of the diene-based rubber (A) may be prepared in advance. In the first stage of kneading, this pre-prepared modified diene-based rubber is blended with optional compounding agents. Then, in the second or later stage of kneading, the metal salt (C) and various ingredients selected as necessary are blended and kneaded to cause the diene-based rubber (A) modified with the heterocyclic compound (B) to complex, thereby forming crosslinked structures through coordination bonds. This method of manufacturing a rubber composition also allows for the easy formation of crosslinked structures through coordination bonds and also offers excellent productivity.

Note that the formation of crosslinking by compounds containing polar groups has been reported in several literature. However, in general, compounds containing polar groups are introduced as monomers during the synthesis of polymers, and the formation of crosslinking during kneading of rubber compositions requires strict kneading conditions. In contrast, in the rubber composition of the present disclosure, crosslinking can be readily formed during the kneading of the rubber composition, which also has the advantage of not requiring special kneading conditions.

### <Rubber Product>

The rubber product of the present disclosure is a rubber product selected from the group consisting of a tire, a rubber crawler, and a seismic isolation rubber, and contains the above-described rubber composition.

Since the rubber product of the present disclosure contains the above-described rubber composition, it is excellent in low fuel consumption performance and durability.

### --Tire--

When the rubber product of the present disclosure is a tire, the applying position of the rubber composition of the present disclosure in the tire is not limited in particular, and may be selected appropriately depending on the purpose. Examples include tread, base tread, sidewall, side-reinforcing rubber, and bead filler, for example.

The method of producing the tire may be a conventional method. For example, the tire may be produced by successively laminating members that are generally used for the production of tires, such as a carcass layer, a belt layer, and a tread layer, which are composed of the unvulcanized rubber composition and/or cord, on a tire molding drum, withdrawing the drum to obtain a green tire, then heating and vulcanizing the green tire with a conventional method to obtain a desired tire (for example, a pneumatic tire).

### --Rubber Crawler--

When the rubber product of the present disclosure is a rubber crawler, in one embodiment, the rubber crawler has a steel cord, an intermediate rubber layer covering the steel cord, a core disposed on the intermediate rubber layer, and a main rubber layer surrounding the intermediate rubber layer and the core, and further includes a plurality of lugs on the ground side of the main rubber layer. Here, the rubber composition of the present disclosure may be used in any part of the rubber crawler, but it is preferably used in the main body rubber layer, particularly in the lugs, because of its superior durability.

### --Seismic Isolation Rubber--

When the rubber product of the present disclosure is a seismic isolation rubber, in one embodiment, the seismic isolation rubber includes a laminate in which a soft layer and a hard layer are alternately stacked, and a plug inserted into a hollow portion formed at the center of the laminate. In one embodiment, the rubber composition of the present disclosure described above can be used for at least one of the soft layer and the plug.

### EXAMPLES

The present disclosure will be described in more detail below with reference to examples, although the present disclosure is not limited to these examples.

### <Method for Determining Weight Average Molecular Weight (Mw) of Diene-based Rubber>

The weight average molecular weight was determined as a standard polystyrene-equivalent value by performing a gel permeation chromatography (GPC) measurement under the following conditions.

GPC: HLC-8320 GPC manufactured by Tosoh Corporation; column: TSKgel G4000HXL × 2 columns manufactured by Tosoh Corporation (column temperature: 40°C); mobile phase: tetrahydrofuran (flow rate: 1 ml/min); detector: differential refractometer (a multi-wavelength detector (detection wavelength: 254 nm) was further coupled); and standard material: TSK standard polystyrene manufactured by Tosoh Corporation.

### <Preparation and Evaluation of Rubber Composition>

Rubber compositions were produced using a generally used Banbury mixer in the formulations listed in Tables 1 and 9. The low fuel consumption performance and the durability of the resulting rubber compositions were measured with the following methods.

In addition, the bond dissociation energy between the formulated metal salt (C) and the heterocyclic compound (B) was measured by the following method.

### (1) Evaluation Method for Low Fuel Consumption

Test specimens were prepared from the rubber compositions, and viscoelasticity tests were conducted using "ARES-G2" manufactured by TA Instruments at a frequency of 15 Hz, a shear strain of 3%, and a temperature of 30°C to measure the loss tangent (tan δ) of the rubber compositions. The evaluation results are expressed as follows. In Table 1, the data were normalized with the reciprocal of the formulation data of each example using the formulation data of Comparative Example 1 as the control (having an index value of 100). In Table 2, the data were normalized with the reciprocal of the formulation data of each example using the formulation data of Comparative Example 6 as the control (having an index value of 100). In Table 3, the data were normalized with the reciprocal of the formulation data of each example using the formulation data of Comparative Example 7 as the control (having an index value of 100). In Table 4, the data were normalized with the reciprocal of the formulation data of each example using the formulation data of Comparative Example 8 as the control (having an index value of 100). In Table 5, the data were normalized with the reciprocal of the formulation data of each example using the formulation data of Comparative Example 11 as the control (having an index value of 100). In Table 6, the data were normalized with the reciprocal of the formulation data of each example using the formulation data of Comparative Example 16 as the control (having an index value of 100). In Table 7, the data were normalized with the reciprocal of the formulation data of each example using the formulation data of Comparative Example 17 as the control (having an index value of 100). In Table 8, the data were normalized with the reciprocal of the formulation data of each example using the formulation data of Comparative Example 20 as the control (having an index value of 100). In Table 9, the data were normalized with the reciprocal of the formulation data of each example using the formulation data of Comparative Example 22 as the control (having an index value of 100). A larger index value indicates a smaller tan δ and a more excellent low fuel consumption performance.

### (2) Evaluation Method 1 of Durability

The durability of the rubber compositions listed in Table 1 was evaluated by the following method.

A strip-shaped test specimen with a hole drilled in the center was prepared from each rubber composition. Using this test specimen, a dc/dn test was conducted using a "Servopulser" manufactured by Shimadzu Corporation at a frequency of 5 Hz and a temperature of 40°C. The test involved conducting a constant stress test at stress levels of 2 or higher for each formulation. The crack propagation rate was calculated at the time when the value of the common logarithm of the tearing energy [J/m²] at a repetition of 1950 cycles reached 3.9. For the crack propagation rate obtained by the above process, the data were normalized with the reciprocal of the formulation data of each example using the formulation data of Comparative Example 1 as the control (having an index value of 100). A larger index value indicates a lower crack propagation rate and more excellent durability (crack propagation resistance).

### (3) Evaluation Method 2 of Durability

The durability of the rubber compositions listed in Table 2 was evaluated by the following method.

A ring-shaped specimen with an inner diameter of 8 mm and an outer diameter of 12 mm was prepared from each rubber composition. The test specimen was elongated 100% at a rate of 100 mm/min using a tensile testing machine manufactured by Instron, and then returned to the initial length at the same rate. The area of the loop drawn by the strain-stress curve at that time was used as the hysteresis loss at 100% elongation. As this value increases, more energy can be dissipated, making it more difficult for cracks to propagate. Thus, it was used as an indicator of durability (crack propagation resistance). The data were normalized with the formulation data of each example using the formulation data of Comparative Example 6 as the control (having an index value of 100). As the index value increases, the area of the loop drawn by the strain-stress curve increases, indicating excellent durability (crack propagation resistance).

### (4) Evaluation Method 3 of Durability

The durability of the rubber compositions listed in Tables 3 and 4 was evaluated by the following method.

A ring-shaped specimen with an inner diameter of 8 mm and an outer diameter of 12 mm was prepared from each rubber composition. The test specimen was elongated 100% at a rate of 100 mm/min using a tensile testing machine manufactured by Instron, and then returned to the initial length at the same rate. This measurement was performed twice in succession, and the area of the loop drawn by the strain-stress curve obtained in the second measurement was used as the hysteresis loss at 100% elongation. As this value increases, more energy can be dissipated, making it more difficult for cracks to propagate. Thus, it was used as an indicator of durability (crack propagation resistance). In Table 3, the data were normalized with the formulation data of each example using the formulation data of Comparative Example 7 as the control (having an index value of 100), and in Table 4, the data were normalized with the formulation data of each example using the formulation data of Comparative Example 8 as the control (having an index value of 100). As the index value increases, the area of the loop drawn by the strain-stress curve increases, indicating excellent durability (crack propagation resistance).

In Tables 3 and 4, the performance is considered to be improved when the sum of the low fuel consumption performance and durability indexes is 205 or higher.

### (5) Evaluation Method 4 of Durability

The durability of the rubber compositions listed in Tables 5 to 9 was evaluated by the following method.

A ring-shaped specimen with an inner diameter of 8 mm and an outer diameter of 12 mm was prepared from each rubber composition. The test specimen was elongated at a rate of 100 mm/min so that the strain energy reached 1 MPa using a tensile testing machine manufactured by Instron, and then returned to the initial length at the same rate. The area of the loop drawn by the strain-stress curve at that time was used as the hysteresis loss at an elongation with a strain energy of 1 MPa. As this value increases, more energy can be dissipated, making it more difficult for cracks to propagate. Thus, it was used as an indicator of durability (crack propagation resistance). In Table 5, the data were normalized with the formulation data of each example using the formulation data of Comparative Example 11 as the control (having an index value of 100). In Table 6, the data were normalized with the formulation data of each example using the formulation data of Comparative Example 16 as the control (having an index value of 100). In Table 7, the data were normalized with the formulation data of each example using the formulation data of Comparative Example 17 as the control (having an index value of 100). In Table 8, the data were normalized with the formulation data of each example using the formulation data of Comparative Example 20 as the control (having an index value of 100). In Table 9, the data were normalized with the formulation data of each example using the formulation data of Comparative Example 22 as the control (having an index value of 100). As the index value increases, the area of the loop drawn by the strain-stress curve increases, indicating excellent durability (crack propagation resistance).

In Tables 5 to 9, the performance is considered to be improved when the sum of the low fuel consumption performance and durability indexes is 205 or higher.

### (6) Calculation Method of Bond Dissociation Energy

The bond dissociation energy between the metal ion in the metal salt (C) (specifically, the metal ion in the metal salt (C)) and the heterocyclic compound (B) (specifically, the functional group in the heterocyclic compound (B)) is a value calculated in the M06/6-31G(d,p)//B3PW91-D3/6-31G(d,p) level or the M06/6-31G(d,p) level in vacuum, and is a calculated value in the structure in which the heterocyclic compound (B) is bonded to the diene-based rubber (A). It is considered that the metal salt (C) and the heterocyclic compound (B) form ionic aggregates. Gaussian 09 or GRRM 14 can be used to calculate the bond dissociation energy. Here, the dissociation energy of the coordination bond between the central metal and the tetrazine derivative is determined under the conditions at the M06/6-31G(d,p) level of theory and in the gas phase.

The bond dissociation energy between the metal salt (C) [FeCl₂·4H₂O] and the heterocyclic compound (B) [3,6-di(2-pyridyl)-1,2,4,5-tetrazine] of the rubber compositions produced in Examples 1-9, 17-20, 23-25, and 28 is 412.6 kJ/mol.

Furthermore, the bond dissociation energy between the metal salt (C) [Ni(CH₃COO)₂·4H₂O] and the heterocyclic compound (B) [3,6-di(2-pyridyl)-1,2,4,5-tetrazine] of the rubber compositions produced in Examples 10-12 and 34-35 is 244.1 kJ/mol.

Furthermore, the bond dissociation energy between the metal salt (C) [zinc dimethacrylate] and the heterocyclic compound (B) [3,6-di(2-pyridyl)-1,2,4,5-tetrazine] of the rubber compositions produced in Examples 13-16, 21, 22, 26, 27, 29-33, and 36-40 is 111.9 kJ/mol.

**[Table 1]**

| | | | Comp. Ex. 1 | Comp. Ex. 2 | Comp. Ex. 3 | Comp. Ex. 4 | Comp. Ex. 5 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|---|---|---|---|
| Formulation | SBR *1 | parts by mass | 100 | 100 | 100 | 100 | 100 | 100 | 100 | 100 | 100 | 100 | 100 | 100 | 100 | 100 |
| | Carbon black-1 *2 | | 50 | 50 | 50 | 50 | 50 | 50 | 50 | 50 | 50 | 50 | 50 | 50 | 50 | 50 |
| | Heterocyclic compound *3 | | - | - | - | - | - | 0.25 | 0.76 | 1.26 | 1.76 | 0.98 | 0.76 | 2.36 | 2.52 | 3.28 |
| | Anti-adhesion agent *4 | | 1.60 | 1.60 | 1.60 | - | 1.60 | 1.60 | 1.60 | 1.60 | 1.60 | 1.60 | 1.60 | - | 1.60 | 1.60 |
| | Sulfur-1 *5 | | 1.20 | 1.56 | 1.02 | 1.20 | 2.40 | 1.08 | 0.84 | 0.60 | 0.36 | 1.09 | 1.68 | 1.68 | - | - |
| | Vulcanization accelerator-1 *6 | | 2.16 | 2.81 | 1.84 | 2.16 | 1.08 | 1.94 | 1.51 | 1.08 | 0.65 | 1.97 | 0.76 | 0.76 | - | - |
| | Zinc oxide *7 | | 2.50 | 2.50 | 2.50 | 2.50 | 2.50 | 2.50 | 2.50 | 2.50 | 2.50 | 2.50 | 2.50 | 2.50 | | |
| | Iron chloride *8 | | - | - | - | - | - | 0.21 | 0.64 | 1.07 | 1.49 | 0.83 | 0.64 | 1.99 | 2.13 | 2.77 |
| | Other ingredient-1 *9 | | 5.00 | 5.00 | 5.00 | 5.00 | 5.00 | 5.00 | 5.00 | 5.00 | 5.00 | 5.00 | 5.00 | 5.00 | 5.00 | 5.00 |
| Mass ratio of sulfur/ metal salt other than zinc oxide | | - | - | - | - | - | - | 5.07 | 1.31 | 0.56 | 0.24 | 1.32 | 2.63 | 0.84 | - | - |
| Evaluation Results | Low fuel consumption performance | Index | 100 | 105 | 96 | 104 | 104 | 103 | 114 | 110 | 117 | 118 | 113 | 125 | 128 | 133 |
| | Durability | Index | 100 | 27 | 159 | 60 | 47 | 109 | 830 | 912 | 435 | 147 | 149 | 235 | 152 | 192 |

**[Table 2]**

| | | | Comp. Ex. 6 | Ex. 10 | Ex. 11 | Ex. 12 |
|---|---|---|---|---|---|---|
| Formulation | SBR *1 | parts by mass | 100 | 100 | 100 | 100 |
| | Carbon black-1 *2 | | 50 | 50 | 50 | 50 |
| | Heterocyclic compound *3 | | 1.11 | 1.11 | 1.11 | 1.11 |
| | Anti-adhesion agent *4 | | 0.8 | 0.8 | 0.8 | 0.8 |
| | Sulfur-1 *5 | | 0.9 | 0.9 | 0.9 | 0.9 |
| | Vulcanization accelerator-1 *6 | | 1.47 | 1.47 | 1.47 | 1.47 |
| | Zinc oxide *7 | | 2.5 | 2.5 | 2.5 | 2.5 |
| | Nickel acetate tetrahydrate *10 | | - | 0.66 | 1.00 | 1.33 |
| | Other ingredient-1 *9 | | 5.00 | 5.00 | 5.00 | 5.00 |
| Mass ratio of sulfur/ metal salt other than zinc oxide | | - | - | 1.36 | 0.90 | 0.68 |
| Evaluation Results | Low fuel consumption performance | Index | 100 | 104 | 110 | 113 |
| | Durability | Index | 100 | 123 | 123 | 125 |

**[Table 3]**

| | | | Comp. Ex. 7 | Ex. 13 |
|---|---|---|---|---|
| Formulation | IR *11 | parts by mass | 20 | 20 |
| | EPDM *12 | | 80 | 80 |
| | Carbon black-2 *13 | | 61 | 61 |
| | Heterocyclic compound *3 | | - | 0.88 |
| | Sulfur-2 *14 | | 7.5 | 7.5 |
| | Vulcanization accelerator-2 *15 | | 1.3 | 1.3 |
| | Zinc oxide *7 | | 10 | 10 |
| | ZDMA *16 | | - | 1 |
| | Other ingredient-2 *17 | | 2.00 | 2.00 |
| Mass ratio of sulfur/ metal salt other than zinc oxide | | - | - | 7.50 |
| Evaluation Results | Low fuel consumption performance | Index | 100 | 125 |
| | Durability | Index | 100 | 100 |

**[Table 4]**

| | | | Comp. Ex. 8 | Comp. Ex. 9 | Comp. Ex. 10 | Ex. 14 | Ex. 15 | Ex. 16 |
|---|---|---|---|---|---|---|---|---|
| Formulation | IR *11 | parts by mass | 20 | 20 | | 20 | 20 | |
| | EPDM *12 | | 80 | 80 | 100 | 80 | 80 | 100 |
| | Carbon black-2 *13 | | 61 | 61 | 61 | 61 | 61 | 61 |
| | Heterocyclic compound *3 | | - | - | - | 0.88 | 0.88 | 1.1 |
| | Zinc oxide *7 | | 4 | 4 | 4 | 4 | 4 | 4 |
| | ZDMA *16 | | 1 | 1 | 1 | 1 | 1 | 1 |
| | Peroxide *18 | | 5 | 10 | 10 | 5 | 10 | 10 |
| | Other ingredient-3 *19 | | 1.9 | 1.9 | 1.9 | 1.9 | 1.9 | 1.9 |
| Evaluation Results | Low fuel consumption performance | Index | 100 | 104 | 107 | 133 | 138 | 147 |
| | Durability | Index | 100 | 81 | 85 | 83 | 76 | 75 |

**[Table 5]**

| | | | Comp. Ex. 11 | Comp. Ex. 12 | Comp. Ex. 13 | Comp. Ex. 14 | Comp. Ex. 15 | Ex. 17 | Ex. 18 | Ex. 19 | Ex. 20 | Ex. 21 | Ex. 22 | Ex. 23 | Ex. 24 | Ex. 25 |
|---|---|---|---|---|---|---|---|---|---|---|---|---|---|---|---|---|
| Formulation | NR *20 | parts by mass | 60 | 60 | 60 | 80 | 40 | 60 | 60 | 60 | 60 | 60 | 60 | 80 | 80 | 40 |
| | BR-1 *21 | | 40 | 40 | 40 | 20 | 60 | 40 | 40 | 40 | 40 | 40 | 40 | 20 | 20 | 60 |
| | Carbon black-3 *22 | | 50 | 50 | 55 | 50 | 50 | 50 | 50 | 50 | 55 | 50 | 50 | 50 | 50 | 50 |
| | Heterocyclic compound *3 | | - | - | - | - | - | 1.11 | 1.11 | 1.66 | 1.11 | 1.11 | 1.11 | 1.11 | 1.66 | 1.11 |
| | Resin *23 | | 1 | 1 | 1 | 1 | 1 | 1 | 1 | 1 | 1 | 1 | 1 | 1 | 1 | 1 |
| | Anti-adhesion agent *4 | | 1.6 | 1.6 | 1.6 | 1.6 | 1.6 | 1.6 | 1.6 | 1.6 | 1.6 | 1.6 | 1.6 | 1.6 | 1.6 | 1.6 |
| | Sulfur-1 *5 | | 1.05 | 1.37 | 1.05 | 1.05 | 1.05 | 1.05 | 0.84 | 0.84 | 1.05 | 1.05 | 0.84 | 1.05 | 1.05 | 1.05 |
| | Vulcanization accelerator-1 *6 | | 1.40 | 1.82 | 1.40 | 1.40 | 1.40 | 1.44 | 1.12 | 1.12 | 1.40 | 1.40 | 1.12 | 1.40 | 1.40 | 1.40 |
| | Zinc oxide *7 | | 3.5 | 3.5 | 3.5 | 3.5 | 3.5 | 3.5 | 3.5 | 3.5 | 3.5 | 3.5 | 3.5 | 3.5 | 3.5 | 3.5 |
| | Iron chloride *8 | | - | - | - | - | - | 0.80 | 0.80 | 1.19 | 0.80 | - | - | 0.8 | 1.19 | 0.8 |
| | ZDMA *16 | | - | - | - | - | - | - | - | - | - | 0.94 | 0.94 | - | - | - |
| | Other ingredient-4 *24 | | 4.9 | 4.9 | 4.9 | 4.9 | 4.9 | 4.9 | 4.9 | 4.9 | 4.9 | 4.9 | 4.9 | 4.9 | 4.9 | 4.9 |
| Mass ratio of sulfur/ metal salt other than zinc oxide | | - | - | - | - | - | - | 1.31 | 1.05 | 0.71 | 1.31 | 1.12 | 0.89 | 1.31 | 0.88 | 1.31 |
| Evaluation Results | Low fuel consumption performance | Index | 100 | 109 | 93 | 95 | 102 | 137 | 127 | 144 | 124 | 129 | 120 | 111 | 114 | 142 |
| | Durability | Index | 100 | 89 | 109 | 107 | 95 | 90 | 98 | 101 | 97 | 93 | 104 | 105 | 114 | 84 |

**[Table 6]**

| | | | Comp. Ex. 16 | Ex. 26 | Ex. 27 | Ex. 28 | Ex. 29 |
|---|---|---|---|---|---|---|---|
| Formulation | NR *20 | parts by mass | 60 | 60 | 60 | 60 | 60 |
| | BR-1 *21 | | 40 | 40 | 40 | 40 | - |
| | BR-2 *25 | | - | - | - | - | 40 |
| | Carbon black-3 *22 | | 50 | 50 | 50 | 50 | 50 |
| | Heterocyclic compound *3 | | - | 1.11 | 0.89 | 1.11 | 1.11 |
| | Resin *23 | | 1 | 1 | 1 | 1 | 1 |
| | Sulfur-1 *5 | | 1.05 | 0.80 | 0.88 | 0.70 | 0.80 |
| | Vulcanization accelerator-1 *6 | | 1.40 | 1.06 | 1.17 | 0.93 | 1.06 |
| | Zinc oxide *7 | | 3.5 | 3.5 | 3.5 | 3.5 | 3.5 |
| | Iron chloride *8 | | - | - | - | 0.8 | - |
| | ZDMA *16 | | - | 0.94 | 0.75 | - | 0.94 |
| | Other ingredient-4 *24 | | 4.9 | 4.9 | 4.9 | 4.9 | 4.9 |
| Mass ratio of sulfur/ metal salt other than zinc oxide | | - | - | 0.85 | 1.17 | 0.88 | 0.85 |
| Evaluation Results | Low fuel consumption performance | Index | 100 | 114 | 117 | 116 | 135 |
| | Durability | Index | 100 | 105 | 100 | 113 | 100 |

**[Table 7]**

| | | | Comp. Ex. 17 | Comp. Ex. 18 | Comp. Ex. 19 | Ex. 30 | Ex. 31 | Ex. 32 | Ex. 33 | Ex. 34 | Ex. 35 |
|---|---|---|---|---|---|---|---|---|---|---|---|
| Formulation | NR *20 | parts by mass | 60 | 60 | 60 | 60 | 60 | 60 | 60 | 60 | 60 |
| | BR-1 *21 | | 40 | 40 | 40 | 40 | 40 | - | - | 40 | 40 |
| | BR-2 *25 | | - | - | - | - | - | 40 | 40 | - | - |
| | Carbon black-3 *22 | | 50 | 50 | 55 | 50 | 50 | 50 | 50 | 50 | 50 |
| | Heterocyclic compound *3 | | - | - | - | 1.11 | 2.22 | 1.11 | 2.22 | 1.11 | 2.22 |
| | Resin *23 | | 1 | 1 | 1 | 1 | 1 | 1 | 1 | 1 | 1 |
| | Sulfur-1 *5 | | 1.05 | 1.37 | 1.05 | 0.80 | 0.74 | 0.80 | 0.74 | 0.80 | 0.74 |
| | Vulcanization accelerator-1 *6 | | 1.40 | 1.82 | 1.40 | 1.06 | 0.98 | 1.06 | 0.98 | 1.06 | 0.98 |
| | Zinc oxide *7 | | 3.5 | 3.5 | 3.5 | 3.5 | 3.5 | 3.5 | 3.5 | 3.5 | 3.5 |
| | ZDMA *16 | | - | - | - | 0.94 | 1.88 | 0.94 | 1.88 | - | - |
| | Nickel acetate tetrahydrate *10 | | - | - | - | - | - | - | - | 0.71 | 1.41 |
| | Other ingredient-4 *24 | | 4.9 | 4.9 | 4.9 | 4.9 | 4.9 | 4.9 | 4.9 | 4.9 | 4.9 |
| Mass ratio of sulfur/ metal salt other than zinc oxide | | - | - | - | - | 0.85 | 0.39 | 0.85 | 0.39 | 1.13 | 0.52 |
| Evaluation Results | Low fuel consumption performance | Index | 100 | 111 | 91 | 115 | 124 | 138 | 137 | 132 | 156 |
| | Durability | Index | 100 | 88 | 104 | 105 | 107 | 98 | 104 | 96 | 98 |

**[Table 8]**

| | | | Comp. Ex. 20 | Comp. Ex. 21 | Ex. 36 | Ex. 37 | Ex. 38 | Ex. 39 |
|---|---|---|---|---|---|---|---|---|
| Formulation | NR *20 | parts by mass | 70 | 70 | 70 | 70 | 70 | 70 |
| | SBR *1 | | 30 | 30 | 30 | 30 | 30 | 30 |
| | Silica *26 | | 50 | 80 | 50 | 80 | 50 | 80 |
| | Heterocyclic compound *3 | | - | - | 1.11 | 1.11 | 2.22 | 2.22 |
| | Resin *23 | | 1 | 1 | 1 | 1 | 1 | 1 |
| | Anti-adhesion agent *4 | | 1.6 | 1.6 | 1.6 | 1.6 | 1.6 | 1.6 |
| | Sulfur-1 *5 | | 1.20 | 1.20 | 1.02 | 1.02 | 0.84 | 0.84 |
| | Vulcanization accelerator-3 *27 | | 3.28 | 3.28 | 2.96 | 2.96 | 2.63 | 2.63 |
| | Silane coupling agent *28 | | 4.00 | 6.40 | 4.00 | 6.40 | 4.00 | 6.40 |
| | Zinc oxide *7 | | 2.5 | 2.5 | 2.5 | 2.5 | 2.5 | 2.5 |
| | ZDMA *16 | | - | - | 0.94 | 0.94 | 1.88 | 1.88 |
| | Other ingredient-5 *29 | | 4.9 | 4.9 | 4.9 | 4.9 | 4.9 | 4.9 |
| Mass ratio of sulfur/ metal salt other than zinc oxide | | - | - | - | 1.09 | 1.09 | 0.45 | 0.45 |
| Evaluation Results | Low fuel consumption performance | Index | 100 | 45 | 111 | 55 | 96 | 54 |
| | Durability | Index | 100 | 150 | 96 | 152 | 110 | 159 |

**[Table 9]**

| | | | Comp. Ex. 22 | Ex. 40 |
|---|---|---|---|---|
| Formulation | NR *20 | parts by mass | 70 | 70 |
| | SBR *1 | | 30 | 30 |
| | Carbon black-1 *2 | | 50 | 50 |
| | Heterocyclic compound *3 | | - | 1.11 |
| | Resin *23 | | 1 | 1 |
| | Anti-adhesion agent *4 | | 1.6 | 1.6 |
| | Sulfur-1 *5 | | 1.20 | 1.02 |
| | Vulcanization accelerator-4 *30 | | 2.16 | 1.84 |
| | Zinc oxide *7 | | 2.5 | 2.5 |
| | ZDMA *16 | | - | 0.94 |
| | Other ingredient-5 *29 | | 4.9 | 4.9 |
| Mass ratio of sulfur/ metal salt other than zinc oxide | | - | - | 1.09 |
| Evaluation Results | Low fuel consumption performance | Index | 100 | 109 |
| | Durability | Index | 100 | 106 |

| | | | | |
|---|---|---|---|---|
| *1 SBR: styrene-butadiene rubber with a bound styrene content of 10%, a 1,2-vinyl bond content of 42%, and a weight average molecular weight (Mw) of 386,982 *2 Carbon black-1: ISAF grade, trade name "Asahi #78" manufactured by Asahi Carbon Co., Ltd. *3 Heterocyclic compound: 3,6-di(2-pyridyl)-1,2,4,5-tetrazine manufactured by Tokyo Chemical Industry Co., Ltd. *4 Anti-adhesion agent: fatty acid metal salt *5 Sulfur-1: trade name "HK200-5" manufactured by Hosoi Chemical Industry Co., Ltd. *6 Vulcanization accelerator-1: the total amount of thiazole-based and sulfenamide-based vulcanization accelerators, which were blended in the same mass ratio in the examples and comparative examples in each of Table 1, Table 2, Table 5, Table 6, and Table 7. *7 Zinc oxide *8 Iron chloride: FeCl₂·4H₂O manufactured by FUJIFILM Wako Pure Chemical Corporation *9 Other ingredient-1: the total amount of stearic acid, wax, and an antioxidant, and each component was blended in the same amount in Comparative Examples 1 to 6 and Examples 1 to 12. *10 Nickel acetate tetrahydrate: manufactured by FUJIFILM Wako Pure Chemical Corporation *11 IR: isoprene rubber, trade name "IR2200" manufactured by ENEOS Materials Corporation *12 EPDM: ethylene-propylene-diene rubber, trade name "PX-006M" manufactured by Mitsui Chemicals, Inc. *13 Carbon black-2: trade name "SEAST 300" manufactured by Tokai Carbon Co., Ltd. *14 Sulfur-2: trade name "SANFEL EX" manufactured by Sanshin Chemical Industry Co., Ltd. *15 Vulcanization accelerator-2: the total amount of thiuram-based and sulfenamide-based vulcanization accelerators, which were blended in the same ratio in Comparative Example 7 and Example 13. *16 ZDMA: zinc dimethacrylate, trade name "DYMALINK 708" manufactured by CRAY VALLEY *17 Other ingredient-2: the total amount of three antioxidants and a retarder, and the ingredients were blended in the same ratio in Comparative Example 7 and Example 13. *18 Peroxide: trade name "PERCUMYL D-40" manufactured by NOF Corporation *19 Other ingredient-3: the total amount of three antioxidants, and the ingredients were blended in the same ratio in Comparative Examples 8 to 10 and Examples 14 to 16. *20 NR: natural rubber *21 BR-1: butadiene rubber, trade name "UBEPOL BR150L" manufactured by Ube Industries, Ltd. *22 Carbon black-3: SAF grade *23 Resin: DCPD resin, trade name "NISSEKI NEORESIN B-100" manufactured by Nippon Petrochemicals Co., Ltd. *24 Other ingredient-4: the total amount of stearic acid, wax, an antioxidant, and a retarder, and the ingredients were blended in the same ratio in Comparative Examples 11 to 19 and Examples 17 to 35. *25 BR-2: prepared modified butadiene rubber (HMI-BR) and the preparation method thereof is described below. | | | | |

### <BR-2: Preparation of Modified Butadiene Rubber (HMI-BR)>

A pressure-resistant glass container, dried and purged with nitrogen, with a volume of approximately 900 mL was charged with 283 g of cyclohexane, 50 g of 1,3-butadiene, 0.0057 mmol of 2,2-ditetrahydrofuryl propane, and 0.513 mmol of hexamethyleneimine (HMI-BR). Subsequently, 0.57 mmol of n-butyl lithium (BuLi) was added. The mixture was then stirred and polymerization was carried out for 4.5 hours in a water bath equipped with a stirrer at 50°C. In this case, the polymerization conversion rate was approximately 100%. Next, 0.100 mmol of tin tetrachloride was quickly added to this polymerization system as a modifying agent (coupling agent), and the mixture was stirred at 50°C for 30 minutes to carry out the modification reaction. Thereafter, 0.5 mL of an isopropanol solution of 2,6-di-t-butyl-p-cresol (BHT) (BHT concentration: 5 mass%) was added to the polymerization reaction system to stop the reaction. The product was then dried according to a regular method to obtain a modified butadiene rubber containing tin atoms (HMI-BR). The vinyl bond content of the butadiene portion of the obtained HMI-BR was determined to be 14% from the integral ratio in the ¹H-NMR spectrum. The glass transition temperature (Tg) was determined to be -95°C from the inflection point of the DSC curve. The coupling ratio was calculated to be 65% based on the ratio of the peak area on the highest molecular weight side to the entire area of the molecular weight distribution curve obtained by gel permeation chromatography (GPC).
*26 Silica: trade name "Nipsil AQ" manufactured by Tosoh Silica Corporation
*27 Vulcanization accelerators-3: the total amount of guanidine-based, thiazole-based, and sulfenamide-based vulcanization accelerators, which were blended at guanidine / thiazole / sulfenamide = 1/1.43/0.5 in Comparative Examples 20 and 21, guanidine / thiazole / sulfenamide = 1/1.21/0.43 in Examples 36 and 37, and guanidine / thiazole / sulfenamide = 1/1/0.35 in Examples 38 and 39.
*28 Silane coupling agent: trade name "ABC-856" manufactured by Shin-Etsu Chemical Co., Ltd.
*29 Other ingredient-5: the total amount of stearic acid, wax, and an antioxidant, and the ingredients were blended in the same ratio in Comparative Examples 20 to 22 and Examples 36 to 40.
*30 Vulcanization accelerator-4: the total amount of thiazole-based and sulfenamide-based vulcanization accelerators, which were blended in the same ratio in Comparative Example 22 and Example 40.

From Tables 1 to 9, it can be seen that the rubber compositions of the examples according to the present disclosure were able to achieve both low fuel consumption performance and durability.

### INDUSTRIAL APPLICABILITY

The rubber composition of the present disclosure can be used in rubber products, such as tires, rubber crawlers, and seismic isolation rubber.

## Claims

1. A rubber composition comprising:
a diene-based rubber (A);
a heterocyclic compound (B) having at least one heterocyclic ring selected from the group consisting of pyrimidine, pyridazine, pyrazine, triazine, and tetrazine rings; and
a metal salt (C), wherein
a bond dissociation energy between the metal salt (C) and the heterocyclic compound (B) is 200 kJ/mol or more.

2. The rubber composition according to claim 1, further comprising a sulfur (D).

3. The rubber composition according to claim 2, wherein a mass ratio (D/C) of the sulfur (D) to the metal salt (C) is 0.1 to 10.

4. The rubber composition according to claim 1, wherein the heterocyclic compound (B) has a triazine ring or a tetrazine ring.

5. The rubber composition according to claim 4, wherein
the heterocyclic compound (B) is represented by the following general formula (1): 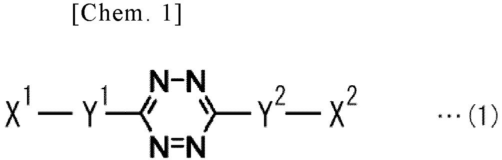 in the formula, X¹ and X² are each independently a pyridyl group or a pyrimidinyl group, and Y¹ and Y² are each independently a single bond or a divalent hydrocarbon group.

6. The rubber composition according to claim 1, wherein the metal salt (C) comprises a transition metal.

7. The rubber composition according to claim 1, wherein the metal salt (C) is a metal halide salt and/or a metal acetate salt.

8. The rubber composition according to claim 1, wherein
the metal salt (C) is a metal salt other than zinc oxide, and
the rubber composition further comprises a zinc oxide (E).

9. The rubber composition according to claim 1, further comprising a carbon black (F).

10. The rubber composition according to claim 1, further comprising a silica (G).

11. The rubber composition according to claim 1, further comprising an organic peroxide (H).

12. The rubber composition according to claim 1, wherein the diene-based rubber (A) is modified with the heterocyclic compound (B).

13. The rubber composition according to claim 1, wherein the diene-based rubber (A) has a weight average molecular weight (Mw) of 10,000 to 3,000,000.

14. A rubber product selected from the group consisting of a tire, a rubber crawler, and a seismic isolation rubber, comprising
the rubber composition according to claim 1.
